# EUROPEAN PATENT SPECIFICATION

(11) **EP 3 091 263 B1**
(45) Date of publication and mention of the grant of the patent: **30.01.2019**
(21) Application number: 15166270.7
(22) Date of filing: 04.05.2015
(51) Int. Cl.: F16L 27/10, F01N 13/16, F01N 13/18, F16L 27/111, F16L 51/02, B29C 63/00

(54) **FLEXIBLE CONDUIT ELEMENT**
FLEXIBLES LEITUNGSELEMENT
ÉLÉMENT DE CONDUITE FLEXIBLE

(43) Date of publication of application: 09.11.2016
(73) Proprietor: Sjm Co., Ltd., Kyungki Province 425-100 (KR)
(72) Inventor: Jae Kwang, Lee, 68163 Mannheim (DE); Grossardt, Benjamin, 55286 Woerrstadt (DE)
(74) Representative: Grünecker Patent- und Rechtsanwälte PartG mbB

(56) References cited:
- EP-A1- 2 450 546
- DE-A1-102012 200 397
- US-A1- 2008 184 704
- US-B1- 6 230 748

## Description

The present invention relates to a flexible conduit element for the joint between an exhaust gas system and a combustion engine of a vehicle, comprising a bellows member which defines a guiding channel for guiding the exhaust gas of the combustion engine to an exhaust gas system.

Further, the present invention relates to an exhaust gas system, comprising the flexible conduit element.

A flexible conduit element of the above-mentioned kind is known, for example, from EP 19 08 936 A1 or EP 2 450 546 A1. Such a flexible conduit element is usable in a pipe system, such as an exhaust gas system of a vehicle, to provide a flexible joint between two exhaust gas pipes, in particular between the joint of the pipes of the exhaust gas system and the exhaust gas opening of a combustion engine. The flexible conduit element serves as a decoupler joint in the exhaust gas system, and is exposed to heat and vibrations, as well as impact loads, which are caused by vibrations of the engine and engine roll when starting the engine during acceleration and braking or gear shifting. Also, road conditions may generate vibration at the exhaust pipe. The flexible conduit element should prevent a transfer of the impact loads, vibrations, etc. to the components which are mounted at the flexible conduit element openings, for example, the combustion engine and the exhaust gas pipes.

Additionally, the flexible conduit element is not only exposed to the above-mentioned loads and movements of the components attached thereto, but is also exposed when used in vehicles to the environment and, thus, also to the different environmental conditions, which might lead to an additional stress to the flexible conduit element, like air moisture, water and/or water contaminated with corrosive substances, like salt, which might enhance the corrosion of parts of the flexible conduit element.

An object of the present invention is to provide a flexible conduit element which is able to function as a joint for coupling, for example an exhaust gas system with an combustion engine, and can resist both the mechanical stresses as well as the environmental stresses which occur in different environmental conditions and during different season of the year.

A further object of the present invention is to provide an exhaust gas system having a flexible conduit member which can resist the mechanical and environmental stresses.

This object is solved according to the invention by means of a flexible conduit element comprising the features of claim 1.

Advantageous embodiments can be derived from the subclaims.

The object with regard to the exhaust gas system is solved according to the invention by an exhaust gas system comprising the features of claim 12.

According to an embodiment of the flexible conduit element for the joint between an exhaust gas system and a combustion engine of a vehicle, said flexible conduit element comprises a bellows member which defines a guiding channel for guiding the exhaust gas of the combustion engine to an exhaust gas system, the bellows member is coated with a high polymer layer. In this regard, the bellows member is to be understood as a corrugated harmonic type cylindrical component. Preferably the guiding channel comprises agrafe-type-like ring elements to provide a flexible and durable component; which is surrounded by the bellows member. The agrafe-type ring elements can comprise hook-like coupling elements for an interactive coupling of the ring elements. Preferably, the bellows member is made of metal.

In this regard, a high polymer layer should be understood as a polymer composed of a large number of monomers. A monomer is a molecule that may be bind chemically to other molecules to form a polymer. A high polymer layer according to the invention is defined as a large molecule of molecular weight greater than 1000 usually composed of repeat units of low molecular weight specification, for example ethylene or propylene. The high polymer can be for example comprise Polyimide (PI) having high rigidity in a temperature range from -270°C to +300°C, Polyamidimide (PAI) a thermoplastic thermally resistant up to 270°C, Polyaryletherketone (PAEK) a high-temperature resistant thermoplastic, Polyphenylensulfid (PPS) a semi-crystalline, high-temperature resistant thermoplastic, Polyarylsulfones (PSU, PPSU) a family of thermoplastic amorphous and polar polymers, and / or Fluorpolymere (PTFE/PVDF) having excellent, almost universal chemical resistance.

According to a further embodiment of the flexible conduit element, the high polymer layer has a heat deflection property, strengthens the corrosive resistance, and/or changes the static and/or dynamic effect of the flexible conduit element. The high polymer layer can be applied to the flexible conduit element, in particular, to the bellows member and/or to the other components of the flexible conduit element in such a thickness that it can change the overall static and dynamic properties of the same which means, the thicker the polymer layer is applied onto a surface of a component of the flexible conduit element, like the bellows member, the stiffer the flexible conduit element becomes and the thinner the high polymer layer is applied onto a surface of a component of the flexible conduit element, like the bellows member, the flexible conduit element stays more flexible than with a thicker high polymer layer . Furthermore, the flexible conduit element can be provided with a high polymer layer which stays when applied very elastic like, for example, rubber.

According to another embodiment of the flexible conduit element, the high polymer layer is configured such that it provides a chemical and/or thermal insulation, a corrosion protection and/or a vibration damping effect. The high polymer layer may be comprised of a plurality of repeat units of low molecular weight specification. Depending on the repeat units different properties can be established, like chemical and/or thermal insulation and also corrosion resistance. The use of a high polymer layer gives the possibility to use for the bellows member materials and / or metals of lower quality. For example, a bellows member made of metal which is protected at the side surface which is exposed to the environment can be comprised of metals with less high alloys and, thus, the bellows member can be produced more cost effective.

According to another embodiment of the flexible conduit element, the high polymer layer is provided at least at one side of the bellows member, in particular on the side of the bellows member, which is opposite to the guiding channel. That only the side of the bellows member which is exposed to the environment is coated or provided with the high polymer layer, provides the advantages that the bellows member can be produced in a more cost efficient way.

According to another embodiment of the flexible conduit element, the high polymer layer is located on the side of the bellows member that is facing to the guiding channel of the flexible conduit element, and/or the high polymer layer facing to the guiding element has at least partially different texture or property as the high polymer layer facing to the outside of the bellows member. This has the advantage that the bellows member is also protected by the corrosion effective part of the exhaust gas which is guided in the conduit element. Additionally, the high polymer layer can be set to the different stresses affecting the bellows member or other components of the flexible conduit element.

According to another embodiment of the flexible conduit element, the high polymer layer is provided with a hose and/or a layer which is knitted, braided or woven. Preferably, the high polymer layer is shaped as a hose such that it can be drawn over the cylindrical shape of the bellows member defined by its analog corrugations. Advantageously, the high polymer layer is knitted, braided or woven such that it has a more flexible property. But the high polymer layer can be also composed of other non-woven textures, materials. The high polymer layer can be also a thin film with a sufficient thickness to be flexible and also resistant enough to withstand the mechanical and thermal stresses and negative corrosion conditions acting on the flexible conduit element during its use.

According to another embodiment of the flexible conduit element, the high polymer layer comprises fibers or filaments having a generally circular, rectangular, triangular and/or square cross-section.

According to another embodiment of the flexible conduit element, the high polymer layer comprises a core wire which is coated with high polymer.

According to a further embodiment of the flexible conduit element, the high polymer layer is a composite layer of high polymer fibers and/or high alloy metals which are mixed woven, braided, knitted in a texture with each other.

According to another embodiment of the flexible conduit element, the high polymer layer at least partially covers parts of the bellows member such that an end portion of the high polymer layer provides a montage portion.

An embodiment refers to an exhaust gas system for a vehicle, in particular an exhaust gas system for a combustion engine, wherein a joint of the exhaust gas system between same and the combustion engine comprises the flexible conduit element according to the features of claims 1 to 11.

The invention will be now described by several embodiments depicted in the following figures. Other and further objects and advantages of the invention together with the features of novelty pertinent thereto will be apparent from the following description.

The accompanying drawings, which form a part of the specification, are to be read in conjunction therewith in which like reference numbers are used to indicate like or similar parts:
- Fig. 1: is a schematic sectional view of first and second embodiments of the flexible conduit element according to the invention having a high polymer layer for protecting the component provided therewith against negative effects of the environment, wherein different embodiments are respectively shown in the upper and the lower half of the sectional view, divided by the middle axis,
- Fig. 2: is another schematic sectional view of further embodiments of the flexible conduit element according to the invention having a high polymer layer, wherein these different embodiments are respectively shown in the upper and the lower half, divided by the middle axis,
- Fig. 3: are further embodiments of the flexible conduit element according to the invention in a sectional view having a high polymer layer on the outer side and/or inner or outer side, wherein the different embodiments are respectively shown in the upper and the lower half, divided by the middle axis,
- Fig. 4: is another schematic sectional view of other embodiments of the flexible conduit element according to the invention having a high polymer layer, wherein different embodiments are respectively shown in the upper and the lower half, divided by the middle axis, and
- Fig. 5: shows in a schematic block diagram method steps for manufacturing a bellows member with a high polymer layer by hydro forming.

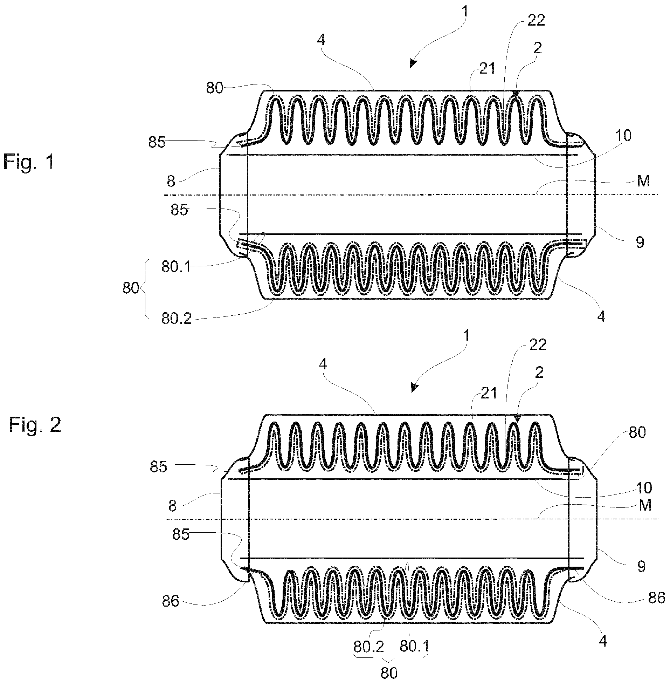

Referring now to the drawings in more detail and initially to Fig. 1, wherein the reference sign 1 generally designates a flexible conduit element which is constructed according to an embodiment of the present invention. The flexible conduit element 1 may couple together a pair of pipes not shown via the mounting elements 8, 9, which are also used to stationary fix the further components of the flexible conduit element 1.

Fig. 1 shows in a schematic sectional view a first and a second embodiment of the flexible conduit element 1 according to the invention, wherein the upper half and the lower half shows respective embodiments, divided by the middle axis M. The upper half and the lower half are half images of the respective embodiments, which are axial symmetrical to the half image not shown. This is also true for the different embodiments of the flexible conduit element 1 shown in Figs. 2 to 4, where the respective embodiments are shown in the respective upper and lower halves divided by the middle axis M. However, each of the half images of the different embodiments can be combined with each other.

The flexible conduit element 1 comprises in the embodiments shown in Figs. 1, 2 and 4, a guiding channel 10 with a generally cylindrical shape which can be made of a braided wire mesh for guiding the exhaust gas of a vehicle. The guiding channel 10 defines a guiding for the exhaust gas coming from the combustion engine which should be guided to the exhaust gas system. Further, the guiding channel 10 can be supported and surrounded by the bellows member 2. The bellows member 2 comprises a plurality of corrugations 21 and undulations 22 of different radial extensions. Preferably, the guiding channel 10 comprises agrafe-type-bellow-parts to provide a flexible and bendable guiding channel 10 which cannot be affected by the vibrations and noise and stresses acting thereon.

Additionally, the flexible conduit element 1 can be surrounded by a flexible member 4 defining an outer mesh for adjusting the dynamic stiffness of the flexible conduit element 1.

Further, the first embodiment shown in the upper half of Fig. 1 includes a high polymer layer 80 which at least partially covers the bellows member 2 at its side facing to the outside the flexible conduit element 1, namely to the flexible member 4, wherein the inner side of the bellows member 2 facing to the guiding channel 10 is not coated with a high polymer layer 80. The bellows member provides a support 85 for the high polymer layer 80. The high polymer layer 80 can be, for example, a knitted, braided or woven fiber element made of a metal alloy which is less expensive as, for example, high-grade steel, like stainless steel.

In the embodiment shown in the lower half of Fig. 1, the bellows member 2 is completely surrounded by the high polymer layer 80, wherein in the embodiment shown in the upper half of Fig. 1, the bellows member is merely partially surrounded by the high polymer layer 80.

The lower half of Fig. 1 shows a second embodiment of the flexible conduit element 1, wherein the bellows member 2 is covered at both sides, facing to the outer net 4 and to the guiding channel 10, with high polymer layers 80.1 and 80.2. Each side can be provided with a high polymer layer 80.1 and 80.2 having the same or different properties. For example the high polymer layer 80.1 located on the inner side of the bellows member, can comprise exhaust-gas resistant materials, wherein the high polymer layer 80.2 located on the outer side of the bellows member can comprise liquid-tight materials which block the entrance of fluid vapors but allows water vapor molecules to exit the bellows member 2. The polymer layer 80 can function like a filter which allows only the exit of vaporized water molecules to prevent a formation of acid and bases within the bellows member. To achieve this, the high polymer layer 80 can define a micro-prose structure which allows only the exit of vaporized water molecules.

Preferably, the polymer layer 80 is configured to provide a thermal insulation, a corrosive resistant, and a stiffness change. Stiffness change means an amendment of the static and dynamic properties of the flexible member to enhance the damping effects, or to increase the stiffness of the flexible conduit element.

Fig. 2 shows a third and a fourth embodiment of the flexible conduit element 1, wherein the upper and the lower half respectively show an axial symmetrical half image of an embodiment of the divided by the middle axis M.

The upper half of the longitudinal section view of Fig. 2 shows a third embodiment of the flexible conduit element 1, wherein the high polymer layer 80 is provided on the inside of the bellows member 2, which is facing to the guiding channel 10. The high polymer layer 80 which is provided on the inside surface of the bellows member 2 is in particular resistant to the corrosion effective substances of the exhaust gas, like acid, base and/or other substances which might corrode the inside of the bellows member 2.

Further, the high polymer layer 80, 80.1, 80.2 is, in particular, air-tight such that the exhaust gas guided in the guiding channel will be blocked by the high polymer layer to exit the flexible conduit element via leaks in the guiding channel and/or the bellows member. Additionally, the high polymer layer 80, 80.1, 80.2 might have thermal, chemical, and/or noise damping properties.

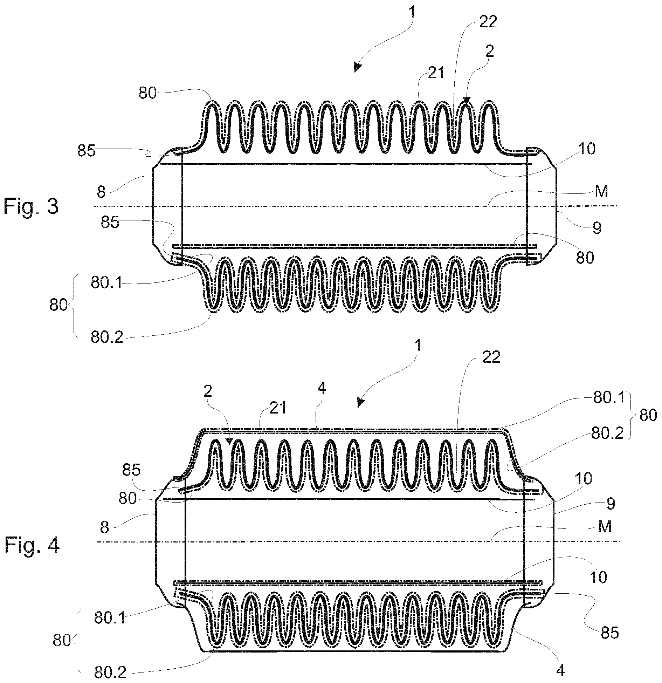

The embodiment shown in the lower half of Fig. 4 of the flexible conduit element 1 provides a bellows member similar to said shown in the lower half of Fig. 1. The end portions 86 of the flexible conduit element 2 in the lower half of Fig. 4 are defined as mounting portions 86 which preferably are not coated with the high polymer layer to ease the mounting thereof with the fixing elements 8 and 9. Said end portion 86 exposes the support element 85, for example a core wire, of the high polymer layer 80, 80.1, 80.2. The exposed end portion 86 can be also established by peeling parts of the high polymer layer 80, 80.1, 80.2 from the area which should be mounted in the fixing elements 8, 9 and which is not exposed to corroding substances of the exhaust gas and/or the environment.

Fig. 3 shows in the respective upper and lower half a fifth and a sixth embodiment of the flexible conduit element 1, divided by the middle axis M.

The upper half of Fig. 3 shows the fifth embodiment of the flexible conduit element, wherein components of the flexible conduit element have been omitted, here the flexible member 4 is defined by an outer net. The high polymer layer 80 of the fifth embodiment is provided on the outside of the bellows member 2 which is facing to the environment. Therefore, a polymer layer is configured such that it can resist the high temperatures and the corroding substances, like salts and acids and bases which might affect the high polymer layer. The high polymer layer is, in particular, configured to protect the bellows member against these substances and/or to provide a damping, chemical, thermal insulation and/or leak-tight protection against a leakage of the exhaust gas. Additionally, the outside located high polymer layer can be supported by an inside high polymer layer 80.3 which is provided at the inside of the guiding channel 10.

The lower half of Fig. 3 shows a sixth embodiment of the flexible conduit element, wherein the bellows member 2 is provided with two different high polymer layers 80.1 and 80.2 which are configured such that the respective layer is most effective to the corroding substances which are provided on the inside to withstand these substances, in particular by the exhaust gases, and the outside of the environment, like salt and corroding liquids.

The upper half of Fig. 4, showing the seventh embodiment of the flexible conduit element 1, wherein the flexible member 4 and the bellows member 2, respectively, are provided with the protecting high polymer layer 80.

The flexible member 4 is provided at both sides thereof with additionally high polymer layers 80.1 and 80.2 such that the flexible member 4 is generally completely coated with the high polymer layer 80. The respective side surfaces of the flexible member 4 which are facing to the outside and the inside of the flexible conduit element can be provided with high polymer layers 80.1 and 80.2 having different properties, wherein the outside high polymer layer 80.1 is more resistant to salts and vapors, wherein the inside high polymer layer 80.2 is more resistant to the base and acid vapors of the exhaust gas.

Preferably, the flexible member 4 is made airtight and/or watertight by the high polymer layer 80 such that the inside of the flexible conduit element 2 is protected against substances common from the outside. The bellows member 2 is provided at the side facing to the guiding channel 10 with the high polymer layer 80, which is configured such that it is resistant to the corroding materials and substances of the exhaust gas and renders the bellows member 2 airtight such that the exhaust gas guided in the guiding channel 10 cannot escape the flexible conduit element at any side portions of the bellows member.

The lower half of Fig. 4 shows an eighth embodiment of the flexible conduit element 1, in particular a half image thereof, which can be combined with the other half image shown in Figs. 1 to 3 or with itself.

In the eighth embodiment of the flexible conduit element 1, at least two components of the flexible conduit element 1 are covered with a high polymer layer 80, 80.1, 80.2 which can, depending on the side which the respective components are facing to, be provided with high polymer layers 80.1, 80.2 having different properties to resist the different mechanical, therminal and chemical stresses acting thereon. For example, the guiding channel 10 which can be made of a flexible tube of braided metal wires can be additionally, partially, or completely be coated with the high polymer layer 80. The high polymer layer 80 of the guiding channel 10 might be configured such that it can resist the corroding substances of the exhaust gas such that the metal used for the wire mesh of the guiding channel 10 must not be one of the high metal alloys but can be one of the metal alloys which are less costly.

The same principle can be used for the bellows member 2, wherein the metal used for the bellows member can be chosen from metals which are less resistant to salt and other corroding substances since the bellows member 2 is protected completely by the high polymer layers 80, 80.1, 80.2 surrounding same, as shown in the lower half of Fig. 4 of the flexible conduit element 1.

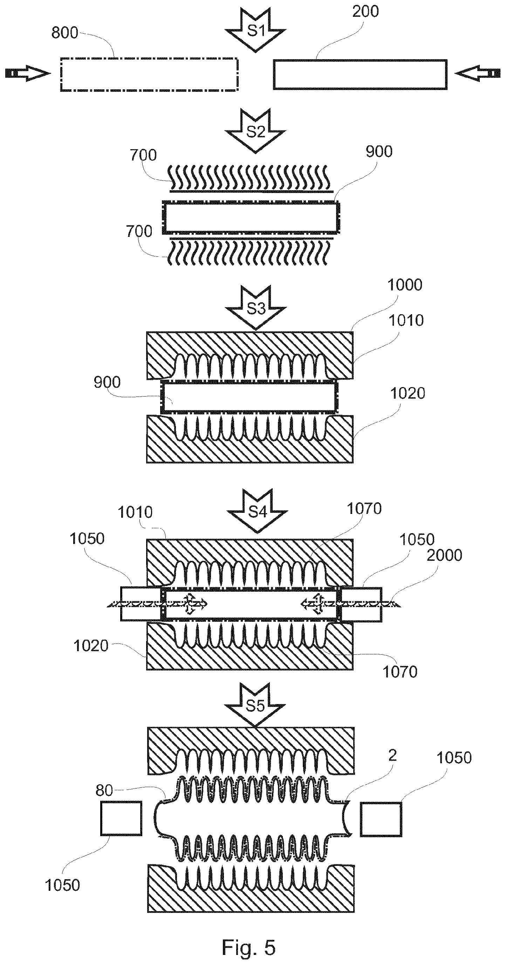

Fig. 5 shows in a schematic block diagram an embodiment of a method as how to produce a bellows member 2 with a high polymer layer 80 by hydro forming. The bellows member 2 with the high polymer layer 80 is manufactured by inserting a metal tube 200 and a high polymer tube 800 which have nearly the same diameter, wherein the high polymer tube is shown in Step S1 of Fig. 5. The two tubes are coaxially aligned to each other such that they can be pressed together, indicated with the arrows as shown in step 2 of Fig. 5.

In Step S2 the two tubes are pressed together and form now a semifinished product 900.

Before inserting the semi-half product 900 into the hydro-forming molding device 1000, preferably, the tube 200 and the polymer tube 800, which are pushed together into the semi-half products 900, are heated to a predetermined temperature such that the high polymer layer adheres to the surface of the tube 200, as indicated with reference sign 700.

This semifinished product 900 is inserted into a hydro-forming molding device 1000 comprising an upper and a lower half with inlet contours which are complementary formed to the outer surface of the bellows member 2. In Step S3 the half product 900 is inserted into the hydro-forming molding device 1000.

After this, the hydro-forming molding device 1000 is fluid tight closed and a fluid, preferably a liquid, is inserted in the hollow cavity defined form the inner space of the half product 900 to urge its wall against complementary forming surface of the upper and lower hydro-forming molding device halves 1010, 1020. The upper half 1010 and the lower half 1020 of the hydro-forming molding device 1000 is moved together to enclosed the semifinished product 900. Each upper an lower half 1010, 1020 is shown in a section view to illustrate the inner shape of the molding surface 1070 of the respective halves, which is complementary shaped to the outer surface of the bellows member 2.

In Step S4 of Fig. 5 the insertion of the liquid 2000 for hydro-forming is shown at its starting point. Preferably, the liquid is inserted over sealing plugs 1050 at both or at only one side of the hydro-forming molding device 2000.

After the semi-half product is molded into the finished shape, the finished bellows member with a high polymer coating 80 is removed from the hydro-forming molding device 900. Therefore, the sealing plugs 1050 and the upper and lower molding halves of the hydro-forming molding device 1000 are opened.

It would be also possible to add strengthening fibers to the high polymer layer at predetermined positions. A mix of different materials would lead to a composite high polymer layer 80, wherein the respective fibers or bands 82 are incorporated into the polymer layer to strengthen its static stiffness.

Alternatively, the high polymer layer 80 is a film which is dispersed onto the bellows member 2 or the bellows member 2 by immersion into a bath of high polymer and / or is sprayed as a coat onto the surface bellows member 2 with the high polymer 80, 80.1, 80.2.

The metal tube 200 can be additionally or solely provided on its inner side with a high polymer inner tube 800, which, after assembled together, are hydro-formed into the shape of the bellows member 2.

## Claims

1. Flexible conduit element (1) for the joint between an exhaust gas system and a combustion engine of a vehicle, comprising
a bellows member (2) which defines a guiding channel (10) for guiding the exhaust gas of the combustion engine to an exhaust gas system, **characterized in that** at least a portion of a side surface of the bellows member (2), in a region where the bellows member (2) is flexible, is coated with a high polymer layer (80), a polymer having a large molecule of molecular weight greater than 1000.

2. Flexible conduit element (1) according to claim 1, **characterized in that** the high polymer layer (80) is configured such that the high polymer layer (80) is heat resistant, preferably comprises Polyimide (PI), or a thermoplastic, like Polyamidimide (PAI), Polyaryletherketone (PAEK), Polyphenylensulfid (PPS), Polyarylsulfones (PSU, PPSU), and / or Fluorpolymere (PTFE/PVDF).

3. Flexible conduit element (1) according to claim 1 or 2, **characterized in that** the high polymer layer (80) has a heat deflecting property, strengthens the corrosive resistance of the flexible conduit element (1) and/or changes the static and/or dynamic stiffness of the flexible conduit element (1).

4. Flexible conduit element (1) according to any of the preceding claims 1 to 3, **characterized in that** the high polymer layer (80) is configured such that it provides a chemical and/or thermal insulation, a corrosion protection and/or a vibration damping effect, in particular at all or at different parts of the flexible conduit element (1).

5. Flexible conduit element (1) according to any of the preceding claims 1 to 4, **characterized in that** the high polymer layer (80) is provided at least at one side of the bellows member (2), in particular on the side of the bellows member (2) which is opposite to the guiding channel (10).

6. Flexible conduit element (1) according to any of the preceding claims 1 to 5, **characterized in that** the high polymer layer (80.1) is located on the side of the bellows member (2) that is facing to the guiding channel (10) of the flexible conduit element (1), and/or the high polymer layer (80.1) facing to the guiding element has at least partially different texture or property as the high polymer layer (80.2) facing to the outside of the bellows member (2).

7. Flexible conduit element (1) according to any of the preceding claims 1 to 6, **characterized in that** the high polymer layer (80) is provided as a hose and/or layer which is knitted, braided or woven.

8. Flexible conduit element (1) according to any of the preceding claims 1 to 7, **characterized in that** the high polymer layer (80) comprise a fiber or filament having a circular, rectangular, triangular and/or square cross-section.

9. Flexible conduit element (1) according to any of the preceding claims 1 to 8, **characterized in that** the high polymer layer (80) comprises a core wire which is coated with high polymer.

10. Flexible conduit element (1) according to any of the preceding claims 1 to 9, **characterized in that** the high polymer layer (80) is a composite layer of high polymer fibers and/or high alloy metals which are mixed woven, braided and/or knitted in a texture with each other.

11. Flexible conduit element (1) according to any of the preceding claims 1 to 10, **characterized in that** the high polymer layer (80) at least partially covers parts of the bellows member (2) such that an end portion of the high polymer layer (80) provides a montage portion.

12. Exhaust gas system for a vehicle, in particular an exhaust gas system for a combustion engine, wherein a joint of the exhaust gas system between same and the combustion engine comprises the flexible conduit element (1) according to the features of claims 1 to 11.

## Patentansprüche

1. Flexibles Leitungselement (1) für die Verbindung zwischen einem Abgassystem und einem Verbrennungsmotor eines Fahrzeugs, das umfasst:
ein Balg-Element (2), das einen Leit-Kanal (10) zum Leiten des Abgases des Verbrennungsmotors zu einem Abgassystem bildet, **dadurch gekennzeichnet, dass** wenigstens ein Abschnitt einer Seitenfläche des Balg-Elementes (2) in einem Bereich, in dem das Balg-Element (2) flexibel ist, mit einer Hochpolymer-Schicht (80), einem Polymer mit einem hohen Molekulargewicht von mehr als 1000, überzogen ist.

2. Flexibles Leitungselement (1) nach Anspruch 1, **dadurch gekennzeichnet, dass** die Hochpolymer-Schicht (80) so ausgeführt ist, dass die Hochpolymer-Schicht (80) wärmebeständig ist und vorzugsweise Polyimid (PI), oder ein Thermoplast, wie beispielsweise Polyamidimid (PAI), Polyaryletherketon (PAEK), Polyphenylensulfid (PPS), Polyarylsulfone (PSU, PPSU) und/oder Fluorpolymer (PTFE/PVDF) umfasst.

3. Flexibles Leitungselement (1) nach Anspruch 1 oder 2, **dadurch gekennzeichnet, dass** die Hochpolymer-Schicht (80) Wärmeformbeständigkeit aufweist, die Korrosionsbeständigkeit des flexiblen Leitungselementes (1) verstärkt und/oder die statische und/oder dynamische Steifigkeit des flexiblen Leitungselementes ändert.

4. Flexibles Leitungselement (1) nach einem der vorangehenden Ansprüche 1 bis 3, **dadurch gekennzeichnet, dass** die Hochpolymer-Schicht (80) so ausgeführt ist, dass sie chemische und/oder thermische Isolierung, Korrosionsschutz und/oder Schwingungsdämpfung, insbesondere an allen oder an unterschiedlichen Teilen des flexiblen Leitungselementes (1), bewirkt.

5. Flexibles Leitungselement (1) nach einem der vorangehenden Ansprüche 1 bis 4, **dadurch gekennzeichnet, dass** die Hochpolymer-Schicht (80) an wenigstens einer Seite des Balg-Elementes (2), insbesondere an der Seite des Balg-Elementes (2), vorhanden ist, die dem Leit-Kanal (10) gegenüberliegt.

6. Flexibles Leitungselement (1) nach einem der vorangehenden Ansprüche 1 bis 5, **dadurch gekennzeichnet, dass** sich die Hochpolymer-Schicht (80.1) an der Seite des Balg-Elementes (2) befindet, die dem Leit-Kanal (10) des flexiblen Leitungselementes (1) zugewandt ist, und/oder die Hochpolymer-Schicht (80.1), die dem Leit-Element zugewandt ist, wenigstens teilweise andere Textur oder Charakteristik aufweist als die Hochpolymer-Schicht (80.2), die der Außenseite des Balg-Elementes (2) zugewandt ist.

7. Flexibles Leitungselement (1) nach einem der vorangehenden Ansprüche 1 bis 6 **dadurch gekennzeichnet, dass** die Hochpolymer-Schicht (80) als ein Schlauch und/oder eine Schicht vorhanden ist, die gewirkt, geflochten oder gewebt ist.

8. Flexibles Leitungselement (1) nach einem der vorangehenden Ansprüche 1 bis 7, **dadurch gekennzeichnet, dass** die Hochpolymer-Schicht (80) eine Faser oder einen Faden umfasst, die/der einen kreisförmigen, rechteckigen, dreieckigen und/oder quadratischen Querschnitt hat.

9. Flexibles Leitungselement (1) nach einem der vorangehenden Ansprüche 1 bis 8, **dadurch gekennzeichnet, dass** die Hochpolymer-Schicht (80) einen Kerndraht umfasst, der mit Hochpolymer beschichtet ist.

10. Flexibles Leitungselement (1) nach einem der vorangehenden Ansprüche 1 bis 9, **dadurch gekennzeichnet, dass** die Hochpolymer-Schicht (80) eine Verbundschicht aus Hochpolymer-Fasern und/oder hochlegierten Metallen ist, die in einer Textur miteinander gemischt gewebt, geflochten und/oder gewirkt sind.

11. Flexibles Leitungselement (1) nach einem der vorangehenden Ansprüche 1 bis 10, **dadurch gekennzeichnet, dass** die Hochpolymer-Schicht (80) Teile des Balg-Elementes (2) wenigstens teilweise so abdeckt, dass ein Endabschnitt der Hochpolymer-Schicht (80) einen Montage-Abschnitt bildet.

12. Abgassystem für ein Fahrzeug, insbesondere ein Abgassystem für einen Verbrennungsmotor, wobei eine Verbindung zwischen dem Abgassystem und dem Verbrennungsmotor das flexible Leitungselement (1) nach einem der Ansprüche 1 bis 11 umfasst.

## Revendications

1. Élément de conduite souple (1) destiné au joint situé entre un système de gaz d'échappement et le moteur à combustion d'un véhicule, comprenant :
un élément formant soufflet (2) qui définit un canal de guidage (10) destiné à guider le gaz d'échappement du moteur à combustion vers un système de gaz d'échappement, **caractérisé en ce qu'**au moins une partie d'une surface latérale de l'élément formant soufflet (2), dans une zone où l'élément formant soufflet (2) est souple, est revêtue d'une couche de haut polymère (80), un polymère comportant une grande molécule de poids moléculaire supérieur à 1000.

2. Élément de conduite souple (1) selon la revendication 1, **caractérisé en ce que** la couche de haut polymère (80) est configurée de sorte à ce que la couche de haut polymère (80) soit résistante à la chaleur et comprenne de préférence un polyimide (PI), ou un thermoplastique tel qu'un polyamideimide (PAI), une polyaryléthercétone (PAEK), un polyphénylènesulfure (PPS), des polyarylsulfones (PSU, PPSU) et/ou un fluoropolymère (PTFE/PVDF).

3. Élément de conduite souple (1) selon la revendication 1 ou la revendication 2, **caractérisé en ce que** la couche de haut polymère (80) présente une propriété de déviation de la chaleur, renforce la résistance à la corrosion de l'élément de conduite souple (1) et/ou modifie la rigidité statique et/ou dynamique de l'élément de conduite souple (1).

4. Élément de conduite souple (1) selon l'une quelconque des revendications 1 à 3 précédentes, **caractérisé en ce que** la couche de haut polymère (80) est configurée de sorte à procurer une isolation chimique et/ou thermique, une protection contre la corrosion et/ou un effet d'amortissement des vibrations, en particulier au niveau de tout ou partie des différents composants de l'élément de conduite souple (1).

5. Élément de conduite souple (1) selon l'une quelconque des revendications 1 à 4 précédentes, **caractérisé en ce que** la couche de haut polymère (80) est disposée au moins sur un côté de l'élément formant soufflet (2), en particulier sur le côté de l'élément formant soufflet (2) qui est opposé au canal de guidage (10).

6. Élément de conduite souple (1) selon l'une quelconque des revendications 1 à 5 précédentes, **caractérisé en ce que** la couche de haut polymère (80.1) est située sur le côté de l'élément formant soufflet (2) qui fait face au canal de guidage (10) de l'élément de conduite souple (1), et/ou que la couche de haut polymère (80.1) qui fait face à l'élément de guidage présente une texture ou une propriété au moins partiellement différente de celle de la couche de haut polymère (80.2) qui fait face à l'extérieur de l'élément formant soufflet (2).

7. Élément de conduite souple (1) selon l'une quelconque des revendications 1 à 6 précédentes, **caractérisé en ce que** la couche de haut polymère (80) est disposée sous forme d'un tuyau souple et/ou d'une couche qui est cousue, tressée ou tissée.

8. Élément de conduite souple (1) selon l'une quelconque des revendications 1 à 7 précédentes, **caractérisé en ce que** la couche de haut polymère (80) comprend une fibre ou un filament présentant une section transversale circulaire, rectangulaire, triangulaire et/ou carrée.

9. Élément de conduite souple (1) selon l'une quelconque des revendications 1 à 8 précédentes, **caractérisé en ce que** la couche de haut polymère (80) comprend un fil d'âme qui est revêtu de haut polymère.

10. Élément de conduite souple (1) selon l'une quelconque des revendications 1 à 9 précédentes, **caractérisé en ce que** la couche de haut polymère (80) est une couche composite de fibres de haut polymère et/ou de métaux fortement alliés qui sont mélangés, tissés, tressés et/ou cousus l'un avec l'autre dans une texture.

11. Élément de conduite souple (1) selon l'une quelconque des revendications 1 à 10 précédentes, **caractérisé en ce que** la couche de haut polymère (80) recouvre au moins partiellement des composants de l'élément formant soufflet (2) de sorte à ce que l'extrémité de la couche de haut polymère (80) procure un organe de montage.

12. Système de gaz d'échappement pour un véhicule, en particulier système de gaz d'échappement pour un moteur à combustion, un joint du système de gaz d'échappement situé entre celui-ci et le moteur à combustion comprenant l'élément de conduite souple (1) conforme aux fonctions des revendications 1 à 11.
